# EUROPEAN PATENT APPLICATION

(11) **EP 2 485 508 A1**
(43) Date of publication of application: **08.08.2012**
(21) Application number: 10820710.1
(22) Date of filing: 01.10.2010
(51) Int. Cl.: H04W 4/06, H04J 11/00, H04W 28/06, H04W 72/04, H04W 72/12

(54) **MOBILE COMMUNICATION METHOD, RADIO BASE STATION AND MOBILE STATION**

(30) Priority: 02.10.2009 JP 2009230628
(71) Applicant: NTT DOCOMO, INC., Chiyoda-ku Tokyo 100-6150 (JP)
(72) Inventor: ISHII, Minami, Tokyo 100-6150 (JP); ABETA, Sadayuki, Tokyo 100-6150 (JP); OKUBO, Naoto, Tokyo 100-6150 (JP)
(74) Representative: HOFFMANN EITLE
(86) International application number: PCT/JP2010/067215
(87) International publication number: WO 2011/040595

(57) **Abstract**

When MBMS communication is performed, a radio resource is efficiently used. A mobile communication method according to the present invention includes a step of notifying, by a radio base station eNB, the configuration of an MBSFN subframe through SIB2, and a step of receiving, by a mobile station UE, a PDSCH signal, which is transmitted in the MBSFN subframe through unicast communication, based on a PDCCH signal generated using C-RNTI of the mobile station UE when a PDCCH signal generated using MBSFN_Off-RNTI and a PDCCH signal generated using the C-RNTI of the mobile station UE have been received in a predetermined OFDM symbol in the MBSFN subframe.

## Description

### TECHNICAL FIELD

The present invention relates to a mobile communication method, a radio base station, and a mobile station.

### BACKGROUND ART

In a mobile communication system employing an LTE (Long Term Evolution) scheme, it is possible to perform "MBMS (Multimedia Broadcast Multicast Service) communication" which is broadcast multicast communication for transmitting the same downlink data signal using a single frequency from a plurality of cells to a particular mobile station UE.

Here, since a format different from that of a subframe used in unicast communication is used in an MBSFN (Multicast Broadcast Single Frequency Network) subframe used in the MBMS communication, a radio base station eNB is configured to notify the configuration of the MBSFN subframe (an MBSFN subframe configuration) in advance through SIB2 (System Information Block Type2), which is broadcast information, so that even a mobile station UE not supporting the MBMS communication can perform communication.

However, in the above-mentioned mobile communication system, since the configuration of the MBSFN subframe (the MBSFN subframe configuration) is notified through the SIB2 which is broadcast information, the MBSFN subframe configuration is not frequently updated.

Meanwhile, there is a problem that since the generation frequency of a downlink data signal transmitted through MCH (MBMS Channel) is changeable, the use efficiency of a radio resource may be reduced by an MBSFN subframe not used for the transmission of the downlink data signal.

### SUMMARY OF THE INVENTION

Therefore, the present invention has been achieved in view of the above-described problems, and an object thereof is to provide a mobile communication method, a radio base station, and a mobile station, by which it is possible to efficiently use a radio resource when MBMS communication is performed.

A first characteristic of the present embodiment is summarized in that a mobile communication method includes: a step of notifying, by a radio base station, the configuration of a predetermined subframe, in which broadcast multicast communication for transmitting the same downlink data signal using a single frequency from a plurality of cells to a particular mobile station is performed, through broadcast information; and a step of receiving, by a mobile station, a downlink data signal, which is transmitted in the predetermined subframe through unicast communication, based on a downlink control signal generated using an identifier of the mobile station UE when a downlink control signal generated using a particular identifier and the downlink control signal generated using the identifier of the mobile station have been received in a predetermined symbol in the predetermined subframe.

A second characteristic of the present embodiment is summarized in that radio base station includes: a broadcast information transmission unit configured to notify the configuration of a predetermined subframe, in which multicast communication for transmitting the same downlink data signal using a single frequency from a plurality of cells to a particular mobile station is performed, through broadcast information; a downlink data signal transmission unit configured to transmit a downlink data signal; and a downlink control signal transmission unit configured to transmit a downlink control signal, wherein, when the downlink data signal transmission unit transmits a downlink data signal in the predetermined subframe through unicast communication, the downlink control signal transmission unit is configured to transmit a downlink control signal generated using a particular identifier and a downlink control signal generated using an identifier of the mobile station in a predetermined symbol in the predetermined subframe.

A third characteristic of the present embodiment is summarized in that a mobile station includes: a broadcast information reception unit configured to receive the configuration of a predetermined subframe, in which broadcast multicast communication for transmitting the same downlink data signal using a single frequency from a plurality of cells to a particular mobile station is performed, through broadcast information; a downlink data signal reception unit configured to receive a downlink data signal; and a downlink control signal reception unit configured to receive a downlink control signal, wherein, when the downlink control signal reception unit has received a downlink control signal generated using a particular identifier and has received a downlink control signal generated using an identifier of the mobile station in a predetermined symbol in the predetermined subframe, the downlink data signal reception unit is configured to receive a downlink data signal, which is transmitted in the predetermined subframe through unicast communication, based on the downlink control signal generated using the identifier of the mobile station.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a diagram explaining an MBSFN reference signal which is transmitted in the mobile communication system according to the first embodiment of the present invention.
[Fig. 3] Fig. 3 is a diagram explaining the mapping of PDSCH in an MBSFN subframe in the mobile communication system according to the first embodiment of the present invention.
[Fig. 4] Fig. 4 is a functional block diagram of a radio base station according to the first embodiment of the present invention.
[Fig. 5] Fig. 5 is a functional block diagram of a mobile station according to the first embodiment of the present invention.
[Fig. 6] Fig. 6 is a flowchart illustrating an operation of the mobile station according to the first embodiment of the present invention.

### BEST MODES FOR CARRYING OUT THE INVENTION

### (Configuration of mobile communication system according to first embodiment of the present invention)

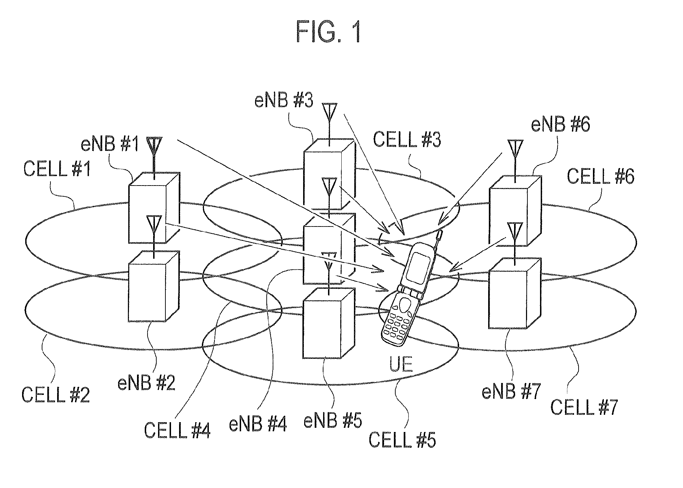

With reference to Fig. 1 to Fig. 5, the configuration of the mobile communication system according to a first embodiment of the present invention will be described.

The mobile communication system according to the present embodiment is an LTE mobile communication system, and is configured to perform MBMS communication, which is broadcast multicast communication for transmitting the same downlink data signal using a single frequency from a plurality of cells #1 to #7 to a particular mobile station UE, as illustrated in Fig. 1.

Here, in the mobile communication system according to the present embodiment, radio base stations eNB #1 to #7 are configured to transmit MBSFN reference signals in MBSFN subframes.

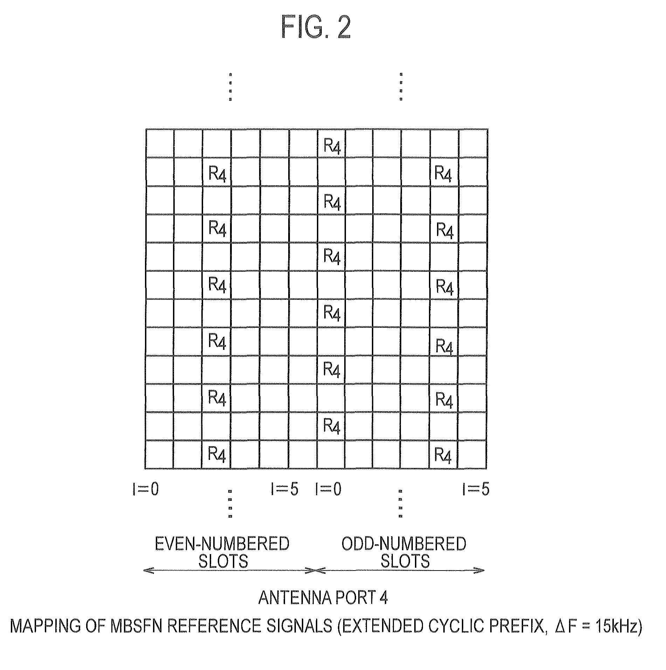

For example, MBSFN reference signals R₄ may also be configured to be mapped to MBSFN subframes and transmitted as illustrated in Fig. 2.

Furthermore, configuration is such that in the MBSFN subframe, a format different from a format of a normal subframe is used.

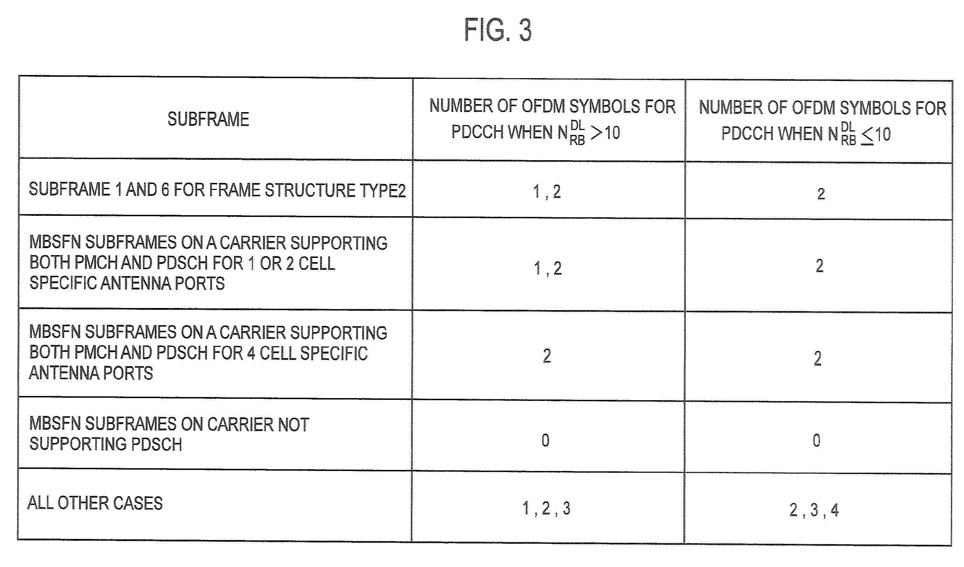

Moreover, in the MBSFN subframe, a PDCCH (Physical Downlink Control Channel) signal (a downlink control signal) is configured to be transmitted in a first or up to second OFDM symbols as illustrated in Fig. 3.

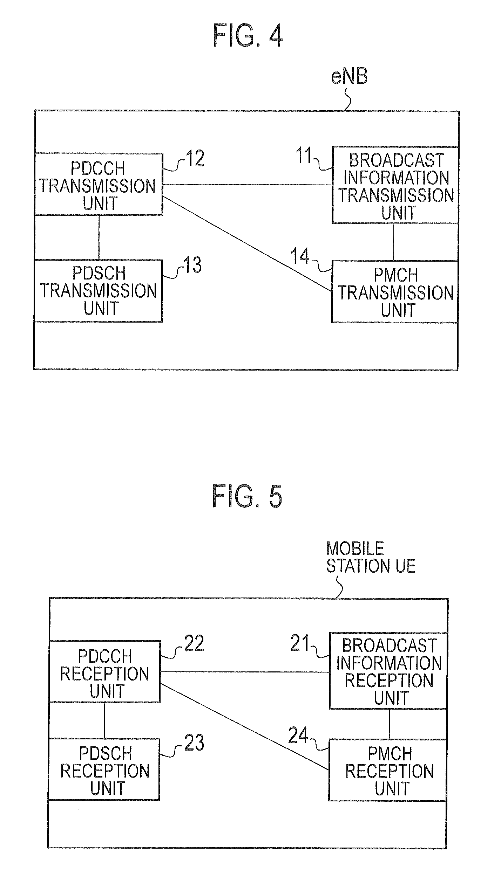

As illustrated in Fig. 4, each of the radio base stations eNB #1 to #7 (hereinafter, representatively referred to as a radio base station eNB) used in the mobile communication system according to the present embodiment includes a broadcast information transmission unit 11, a PDCCH transmission unit 12, a PDSCH transmission unit 13, and a PMCH transmission unit 14.

The broadcast information transmission unit 11 is configured to transmit broadcast information in a cell subordinate to the radio base station eNB.

For example, the broadcast information transmission unit 11 is configured to notify the configuration of the MBSFN subframe (the MBSFN subframe configuration) through SIB2.
The PDCCH transmission unit 12 is configured to transmit a PDCCH signal to a mobile station UE in the cell subordinate to the radio base station eNB. Here, the PDCCH signal includes a scheduling signal and the like.

For example, the PDCCH transmission unit 12 is configured to generate a PDCCH signal for unicast communication by masking using C-RNTI (Cell-Radio Network Temporary Identity) to be assigned to the mobile station UE in the cell subordinate to the radio base station eNB, and transmit the PDCCH signal for unicast communication to the mobile station UE.

The PDSCH transmission unit 13 is configured to transmit a PDSCH (Physical Downlink Shared Channel) signal (a downlink data signal) to the mobile station UE in the cell subordinate to the radio base station eNB.

For example, the PDSCH transmission unit 13 is configured to transmit the PDSCH signal to the mobile station UE in the cell subordinate to the radio base station eNB through a resource designated by the PDCCH signal transmitted by the PDCCH transmission unit 12.

In addition, when the PDSCH transmission unit 13 transmits the PDSCH signal in the MBSFN subframe through the unicast communication, the PDCCH transmission unit 12 is configured to transmit a PDCCH signal generated using MBSFN_Off-RNTI, that is, a PDCCH signal masked by the MBSFN_Off-RNTI, in a predetermined OFDM symbol in the MBSFN subframe.

Here, the MBSFN_Off-RNTTI is a dedicated RNTI for notifying the transmission of the PDSCH signal in the MBSFV subframe through the unicast communication.

For example, "FFF4", "FFFD" or the like may also be used as the MBSFN_Off-RNTI.

In addition, when the PDSCH transmission unit 13 does not transmit the PDSCH signal in the MBSFN subframe through the unicast communication, the PDCCH transmission unit 12 may also be configured to transmit a PDCCH signal generated using MBSFN_On-RNTI in the predetermined OFDM symbol in the MBSFN subframe.

Here, the PDCCH transmission unit 12 may also be configured to transmit the PDCCH signal generated using the MBSFN_Off-RNTI in an OFDM symbol (for example, 2OFDM symbol) identical to the OFDM symbol, in which the PDCCH signal is transmitted, in a subframe (a Normal subframe) in which the unicast communication is performed.

Furthermore, the PDCCH transmission unit 12 may also use a DCI format 1A or 1C as a DCI format of the PDCCH signal generated using the MBSFN_Off-RNTI, similarly to a PDCCH signal generated using P-RNTI, or SI-RNTI.

Here, the PDCCH transmission unit 12 may also ignore a normal definition of the DCI format 1A or 1C, and convert a bit sequence to be transmitted in the DCI format 1A or 1C to a bit sequence in which all bits are "0" or "1".

With such a configuration, even when the PDCCH signal masked by the MBSFN_Off-RNTI is detected, if all information elements thereof are not "0" or "1", it is possible for the mobile station UE to determine that a PRS transmission timing is occurring.

The PMCH transmission unit 14 is configured to transmit a downlink data signal (a PMCH signal) in the MBSFN subframe through the MBMS communication.

As illustrated in Fig. 5, the mobile station UE used in the mobile communication system according to the present embodiment includes a broadcast information reception unit 21, a PDCCH reception unit 22, a PDSCH reception unit 23, and a PMCH reception unit 24.

The broadcast information reception unit 21 is configured to receive the broadcast information transmitted by the radio base station eNB.

For example, the broadcast information reception unit 21 is configured to receive the configuration of the MBSFN subframe (the MBSFN subframe configuration) through the SIB2.

The PDCCH reception unit 22 is configured to receive the PDCCH signal transmitted by the radio base station eNB.

The PDSCH reception unit 23 is configured to receive the PDSCH signal transmitted by the radio base station eNB.

Here, when the PDCCH reception unit 22 has received the PDCCH signal generated using the MBSFN_Off-RNTI and a PDCCH signal generated using C-RNTI (an identifier) of the mobile station UE in a predetermined OFDM symbol (for example, 2OFDM symbol) in the MBSFN subframe, the PDSCH reception unit 23 is configured to receive the PDCCH signal, which is transmitted in the MBSFN subframe through the unicast communication, based on the PDCCH signal generated using the C-RNTI of the mobile station UE.

That is, when the PDCCH reception unit 22 has received the PDCCH signal masked by the MBSFN_Off-RNTI and has decoded a PDCCH signal (a PDCCH signal addressed to the mobile station UE) masked by the C-RNTI of the mobile station UE in the predetermined OFDM symbol (for example, 2OFDM symbol) in the MBSFN subframe, the PDSCH reception unit 23 is configured to determine that a PDSCH signal addressed to the mobile station UE has been transmitted in the MBSFN subframe through the unicast communication, and receive the PDSCH signal addressed to the mobile station UE based on the PDCCH signal masked by the C-RNTI of the mobile station UE.

The PMCH reception unit 24 is configured to receive downlink data signals transmitted from a plurality of the cells #1 to #7 in the MBSFN subframe through the MBMS communication.

### (Operation of the mobile communication system according to the first embodiment of the present invention)

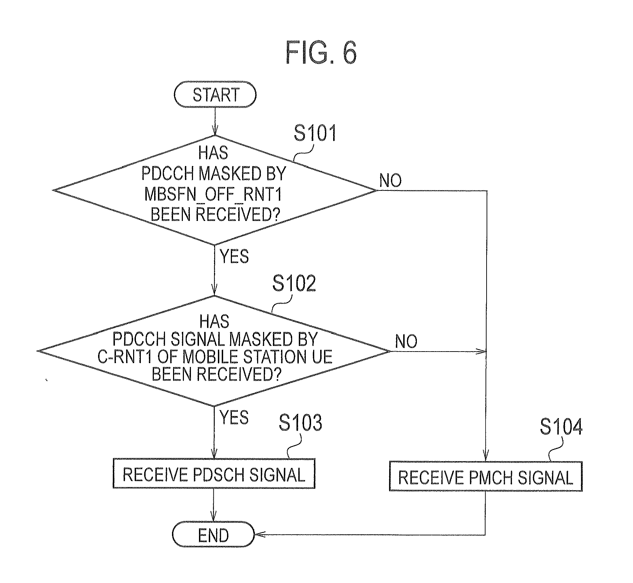

With reference to Fig. 6, the operation of the mobile communication system according to the first embodiment of the present invention, specifically, the operation of the mobile station UE according to the first embodiment of the present invention will be described.

As illustrated in Fig. 6, in step S101, the mobile station UE determines whether the PDCCH signal masked by the MBSFN_Off-RNTI has been received in a predetermined OFDM symbol in the MBSFN subframe.

When it is determined that the PDCCH signal masked by the MBSFN_Off-RNTI has been received, the mobile station UE determines whether the PDCCH signal masked by the C-RNTI of the mobile station UE has been received in the predetermined OFDM symbol in the MBSFN subframe, in step S102.

When it is determined that the PDCCH signal has been received, the mobile station UE receives the PDSCH signal addressed to the mobile station UE through a resource in the MBSFN subframe designated by the PDCCH signal, in step S103.

Meanwhile, when it is determined that the PDCCH signal masked by the MBSFN_Off-RNTI has not been received, if the mobile station UE is a mobile station UE that receives an MBMS signal, the mobile station UE receives a downlink data signal transmitted in the MBSFN subframe through MBMS communication, in step S104.

Here, if the mobile station UE is a mobile station UE that does not receive the MBMS signal, the mobile station UE does not perform the process of step S104 and completes the procedure.

### (Operation and Effect of the mobile communication system according to the first embodiment of the present invention)

In accordance with the mobile communication system according to the first embodiment of the present invention, since it is possible to transmit the downlink data signal in the MBSFN subframe through unicast communication, when it is not necessary to transmit the downlink data signal through MBMS communication, it is possible to effectively utilize a radio resource.

The characteristics of the present embodiment as described above may be expressed as follows.

A first characteristic of the present embodiment is summarized in that a mobile communication method includes: a step of notifying, by a radio base station eNB, a configuration (an MBSFN subframe configuration) of an MBSFN subframe (a predetermined subframe in which broadcast multicast communication for transmitting the same downlink data signal using a single frequency from a plurality of cells to a particular mobile station is performed) through SIB2 (broadcast information); and a step of receiving, by a mobile station UE, a PDSCH signal (a downlink data signal), which is transmitted in the MBSFN subframe through unicast communication, based on a PDCCH signal (a downlink control signal) generated using C-RNTI of the mobile station UE when a PDCCH signal (a downlink control signal) generated using MBSFN_Off-RNTI (a particular identifier) and the PDCCH signal (the downlink control signal) generated using the C-RNTI of the mobile station UE have been received in a predetermined OFDM symbol (for example, 2OFDM symbol) in the MBSFN subframe.

In the first characteristic of the present embodiment, the PDCCH signal generated using the MBSFN_Off-RNTI may also be transmitted in an OFDM symbol identical to an OFDM symbol, in which a PDCCH signal is transmitted, in a subframe in which the unicast communication is performed.

A second characteristic of the present embodiment is summarized in that a radio base station eNB includes: a broadcast information transmission unit 11 configured to notify the configuration of an MBSFN subframe through SIB2; a PDSCH transmission unit 13 configured to transmit a PDSCH signal; and a PDCCH transmission unit 12 configured to transmit a PDCCH signal, wherein, when the PDSCH transmission unit 13 transmits a PDSCH signal in the MBSFN subframe through unicast communication, the PDCCH transmission unit 12 is configured to transmit a PDCCH signal generated using MBSFN_Off-RNTI and a PDCCH signal generated using the C-RNTI of the mobile station UE in a predetermined OFDM symbol in the MBSFN subframe.

In the second characteristic of the present embodiment, the PDCCH transmission unit 12 may also be configured to transmit the PDCCH signal generated using the MBSFN_Off-RNTI in an OFDM symbol identical to an OFDM symbol, in which a PDCCH signal is transmitted, in a subframe in which the unicast communication is performed.

A third characteristic of the present embodiment is summarized in that a mobile station UE includes: a broadcast information reception unit 21 configured to receive the configuration of an MBSFN subframe through SIB2; a PDSCH reception unit 23 configured to receive a PDSCH signal; and a PDCCH reception unit 22 configured to receive a PDCCH signal, wherein, when the PDCCH reception unit 22 has received a PDCCH signal generated using the MBSFN_Off-RNTI and a PDCCH signal generated using C-RNTI of the mobile station UE in a predetermined OFDM symbol in the MBSFN subframe, the PDSCH reception unit 23 is configured to receive a PDSCH signal, which is transmitted in the MBSFN subframe through unicast communication, based on the PDCCH signal generated using the C-RNTI of the mobile station UE.

In the third characteristic of the present embodiment, the PDCCH reception unit 22 may also be configured to receive the PDCCH signal generated using the MBSFN_Off-RNTI in an OFDM symbol identical to an OFDM symbol, in which a PDCCH signal is transmitted, in a subframe in which the unicast communication is performed.

In addition, the operation of the above-mentioned radio base station eNB or mobile station UE may be implemented by hardware, may also be implemented by a software module executed by a processor, or may further be implemented by the combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

Such a storage medium is connected to the processor so that the processor can write and read information into and from the storage medium. Such a storage medium may also be accumulated in the processor. Such storage medium and processor may be arranged in an ASIC. Such ASIC may be arranged in the radio base station eNB or the mobile station UE. As a discrete component, such storage medium and processor may be arranged in the radio base station eNB or the mobile station UE.

Thus, the present invention has been specifically explained by using the above-mentioned embodiments; however, it is obvious that for persons skilled in the art, the present invention is not limited to the embodiments explained herein. The present invention can be implemented as corrected and modified modes without departing from the gist and the scope of the present invention defined by the claims. Therefore, the description of the specification is intended for explaining the example only and does not impose any limited meaning to the present invention.

### Industrial Applicability

As described above, in accordance with the present invention, it is possible to provide a mobile communication method, a radio base station, and a mobile station, by which it is possible to efficiently use a radio resource when MBMS communication is performed.

## Claims

1. A mobile communication method, comprising:
a step of notifying, by a radio base station, a predetermined subframe, in which broadcast multicast communication for transmitting the same downlink data signal using a single frequency from a plurality of cells to a particular mobile station is performed, through broadcast information; and
a step of receiving, by a mobile station, a downlink data signal, which is transmitted in the predetermined subframe through unicast communication, based on a downlink control signal generated using an identifier of the mobile station when a downlink control signal generated using a particular identifier and the downlink control signal generated using the identifier of the mobile station have been received in a predetermined symbol in the predetermined subframe.

2. The mobile communication method according to claim 1, wherein the downlink control signal is transmitted in a symbol identical to a symbol, in which a downlink control signal is transmitted, in a subframe in which the unicast communication is performed.

3. A radio base station comprising:
a broadcast information transmission unit configured to notify a predetermined subframe, in which broadcast multicast communication for transmitting the same downlink data signal using a single frequency from a plurality of cells to a particular mobile station is performed, through broadcast information;
a downlink data signal transmission unit configured to transmit a downlink data signal; and
a downlink control signal transmission unit configured to transmit a downlink control signal, wherein
when the downlink data signal transmission unit transmits a downlink data signal in the predetermined subframe through unicast communication, the downlink control signal transmission unit is configured to transmit a downlink control signal generated using a particular identifier and a downlink control signal generated using an identifier of the mobile station in a predetermined symbol in the predetermined subframe.

4. The radio base station according to claim 3, wherein the downlink control signal transmission unit is configured to transmit the downlink control signal generated using the particular identifier in a symbol identical to a symbol, in which a downlink control signal is transmitted, in a subframe in which the unicast communication is performed.

5. A mobile station comprising:
a broadcast information reception unit configured to receive information indicating a predetermined subframe, in which broadcast multicast communication for transmitting the same downlink data signal using a single frequency from a plurality of cells to a particular mobile station is performed, through broadcast information;
a downlink data signal reception unit configured to receive a downlink data signal; and
a downlink control signal reception unit configured to receive a downlink control signal, wherein
when the downlink control signal reception unit has received a downlink control signal generated using a particular identifier and a downlink control signal generated using an identifier of the mobile station in a predetermined symbol in the predetermined subframe, the downlink data signal reception unit is configured to receive a downlink data signal, which is transmitted in the predetermined subframe through unicast communication, based on the downlink control signal generated using the identifier of the mobile station.

6. The mobile station according to claim 5, wherein the downlink control signal reception unit is configured to receive the downlink control signal generated using the particular identifier in a symbol identical to a symbol, in which a downlink control signal is transmitted, in a subframe in which the unicast communication is performed.
